(19) Europäisches Patentamt

European Patent Office

Office européen des brevets

(11) Publication number: **0 325 024 B1**

# (12) EUROPEAN PATENT SPECIFICATION

(45) Date of publication of patent specification: **21.07.93**

(51) Int. Cl.⁵: **G01M 19/00**, G01K 7/12, F04B 51/00

(21) Application number: **88309425.2**

(22) Date of filing: **07.10.88**

(54) **Monitoring the efficiency of liquid pumps.**

(30) Priority: **10.10.87 GB 8723840**

(43) Date of publication of application:
**26.07.89 Bulletin 89/30**

(45) Publication of the grant of the patent:
**21.07.93 Bulletin 93/29**

(84) Designated Contracting States:
**AT BE CH DE ES FR GB GR IT LI LU NL SE**

(56) References cited:
CH-A- 635 679
US-A- 3 903 743
US-A- 4 217 761

ARBEITSMETHODEN DER THERMODYNAMIK,
Band I, 1981, Springer-Verlag, Berlin, Heidel-
berg, New York F.X. EDER
"Temperaturmessung" pages 54-59

(73) Proprietor: **SCOTTISH ENTERPRISE**
**120 Bothwell Street**
**Glasgow G2 7JP, Scotland(GB)**

(72) Inventor: **Murray, Brian Gilchrist**
**3 Old Mart Road**
**Torphins, Aberdeen, Scotland(GB)**

(74) Representative: **Stokes, Graeme Wilson et al**
**c/o Cruikshank & Fairweather 19 Royal Ex-**
**change Square**
**Glasgow G1 3AE Scotland (GB)**

EP 0 325 024 B1

## Description

This invention relates to a method of monitoring the efficiency of liquid pumps by a measurement of temperature differentials.

In many industries, the energy cost of operating pumps is of considerable significance. Thus, if pumps can be maintained, or their operating configurations adjusted, so that pump efficiency is continually maximised, then substantial financial advantage is attainable. Moreover, routine monitoring of pump efficiency gives early indication of possible deterioration due to errosion or wear and so promotes timely and economic maintenance.

Thermometric pump efficiency monitoring has been proposed on the basis that the temperature rise across a pump is a measure of energy loss in the pump, whilst the pressure or head rise across the pump measures the useful work. Such a proposal is described by A Whillier, Mining Research Laboratory, Chamber of Mines of South Africa, Johannesburg ("SITE TESTING OF PUMPS" IME London 1972, pages 209-217), who draws attention to the need for several centimetres thickness of thermal insulation over thermocouples in contact with pipe surfaces. However, the values of temperature rise are small, and temperature measurements have hitherto been impaired by shortcomings in the thermal insulation of the thermocouples from the environment immediately surrounding the pipes to which they are attached. The traditional means of sensing accurately the temperature of a liquid in a pipe involves the use of a thermowell which allows the temperature sensor to project into the liquid. The fitting of thermowells, especially to working plant, can be both costly and inconvenient.

According to the present invention, there is provided a method of monitoring the efficiency of a liquid pump comprising the steps of securing temperature sensing means in close thermal contact with outside surfaces of suction and discharge conduits of the pump respectively, providing thermal insulation over each sensing means, and using an electrical output from the sensing means as a measure of the temperature rise across the pump, characterised in that the thermal insulation over each sensing means comprises a diaphragm enclosing a still-air pocket around the sensing means.

By using surface contact thermocouple junctions, the disadvantages of thermowells are avoided. Thermocouples having junctions of which the temperature coefficients match to within a thousandth of a degree Centigrade are provided by using wire elements from the same respective alloy batches. The heat transfer coefficient between flowing liquid and a pipe wall inside surface is of the order of one thousand times greater than that between the pipe wall outside surface and ambient air. Thus, the temperatures at the pipe wall inside and outside surfaces are very close to the liquid temperature; and the proximity of the outside surface temperature to the liquid temperatures is greatly enhanced by providing improved thermal insulation at the outside surface.

An embodiment of the present invention will now be described, by way of example, with reference to the accompanying drawings in which:-

Fig. 1 is a diagrammatic representation showing the arrangement of a pump efficiency monitoring system in accordance with the present invention; and

Fig. 2 is a general circuit diagram of the system shown in Fig. 1.

In the drawings, the liquid pump 10 has suction and discharge conduits 11 and 12 respectively, these being metal pipes. The efficiency of the pump 10 can be measured thermometrically by substituting measured temperature and pressure variables in the following formula:-

$$E = \frac{1}{1 + r.\, Cp.\, \dfrac{Dt}{Dp}}$$

Where:-
E = the efficiency
r is the density of the pumped liquid
Cp is the specific heat of the pumped liquid
Dt is the measured temperature rise
Dp is the measured head rise.

Measurement of the head or pressure rise across the pump 10 is not the concern of the present invention. However, the invention is concerned with the measurement of the extremely small temperature rise across the pump 10. To this end, a thermocouple is constructed having first and second junctions 13, 14 (popularly termed "cold" and "hot" junctions) disposed on opposite sides of the pump. Each thermocouple junction is in close thermal contact with the associated conduit or pipe 11 or 12. Thus, each thermocouple junction is bonded to the cleaned pipe surface by means of a low-viscosity bonding agent such as an alkyl cyano acrylate (popularly known as "superglue"). The electrical conductors or wire elements of the junctions 13, 14 are led to a junction box 15 which is turn is interconnected with voltage-measuring instrumentation 16.

Thermal insulation is provided over each thermocouple junction 13, 14. Thus, an air-tight still-air pocket 17 is established around each junction by means of a cupped diaphragm 18 made from a compliant material such as a silicone rubber. The periphery or rim of each diaphragm 18 is attached to the pipe wall by means of an adhesive. Each junction/diaphragm arrangement is further enclosed by a protective box cover 19 which may conveniently be strapped in position on the pipe 11 or 12. Each box cover 19 carries an electrical terminal assembly 20 to provide a convenient means of establishing electrical connections between the junctions 13, 14 and the junction box 15.

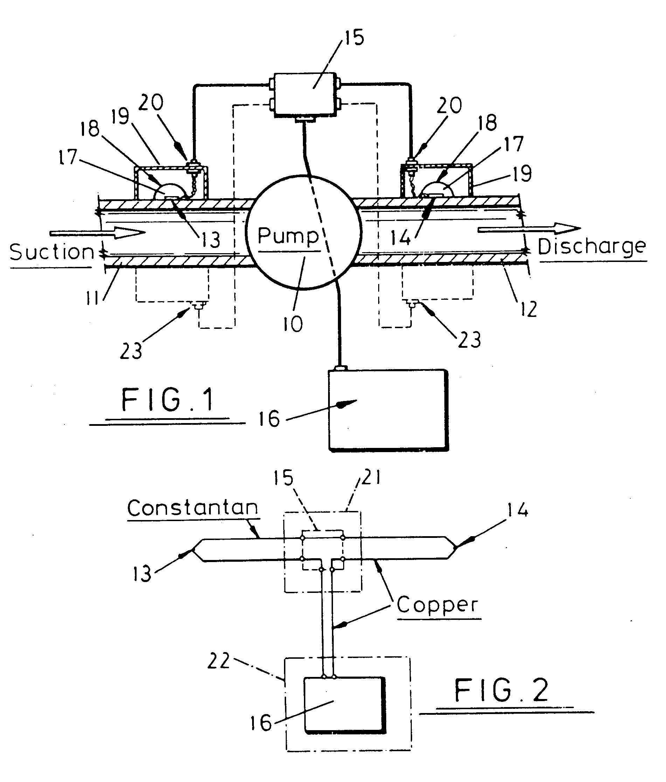

The apparatus is designed to measure temperature differences down to one millidegree (0.001°C). In order to attain the appropriate resolution, the temperature coefficients of the thermocouple junctions 13, 14 must closely match, to within a thousandth of a degree Centigrade. Such close matching is attained by ensuring that the wire elements used in the construction of the thermocouple are from the same respective alloy batches. A suitable thermocouple is copper/constantan, as shown in Fig. 2. All of the constantan wire material is from the same alloy batch; and all of the copper material (at least between the junction box 15 and the thermocouple junctions 13, 14) is also from the same alloy or melt batch. As is also shown in Fig. 2, the copper elements of the thermocouple are used in connections with the instrumentation 16 thus avoiding further dissimilar metal junctions since copper is virtually universally used in the manufacture of electrical equipment. In order further to reduce spurious electrical potentials, both the junction box 15 and the instrumentation 16 may be wrapped in thermal insulating material as indicated by reference numerals 21 and 22.

It is envisaged that a thermocouple arrangement as above described be permanently provided for a single pump installation, and the measuring instrumentation 16 be connected as and when required for a monitoring operation. It will be evident that the system is relatively cheap and easy to install.

In a modification of the system described above, within the scope of the present invention, a pair of thermocouples each as described above may be employed in "tandem" for example in cases where the head rise across the pump is less than 10 bar. Such a tandem arrangement is indicated in Fig. 1 by broken lines 23.

**Claims**

1.  A method of monitoring the efficiency of a liquid pump (10), comprising the steps of securing temperature sensing means (13,14) in close thermal contact with outside surfaces of suction and discharge conduits (11,12) of the pump (10) respectively, providing thermal insulation (17,18,19) over each sensing means, and using an electrical output from the sensing means as a measure of the temperature rise across the pump (10); characterised in that the thermal insulation over each sensing means (13,14) comprises a diaphragm (18) enclosing a still-air pocket (17) around the sensing means (13,14).

2.  The method claimed in claim 1; characterised in that the diaphragm (18) is a cupped diaphragm of a compliant material.

3.  The method claimed in claim 2; characterised in that the said compliant material is a silicone rubber.

4.  The method claimed in any one of claims 1 to 3; characterised in that the periphery of the diaphragm (18) is attached to its conduit (11,12) by means of an adhesive so that the pocket (17) within the diaphragm (18) is air-tight.

5.  The method claimed in any one of the preceding claims; characterised in that the temperature sensing means comprises thermocouple junctions (13,14), and the mutually corresponding wire elements of the thermocouple are from the same alloy batches.

6. The method claimed in claim 5; characterised in that one wire of the thermocouple is of copper and is used for connection to a voltage measuring instrument (16).

7. The method claimed in claims 5 or 6; characterised in that the thermocouple junctions (13,14) are secured to said conduits (11,12) by means of a bonding agent.

8. The method claimed in claim 7; characterised in that the bonding agent is prior to setting thereof a low-viscosity liquid to attain optimum closeness of thermal contact between junction and conduit surface.

9. The method claimed in claim 8; characterised in that the bonding agent is an alkyl cyano acrylate.

**Patentansprüche**

1. Verfahren zur Überwachung des Wirkungsgrades von Flüssigkeitspumpen (10), umfassend die Schritte des Befestigens von Temperatur-Abtast-Mitteln (13, 14) in engem Wärmekontakt mit den äußeren Oberflächen von Ansaug- bwz. Auslaufrohrleitungen (11, 12) der Pumpe (10), Ausrüsten mit Wärmeisolierung (17, 18, 19) über jedem Aufnahmemittel, und Nutzung des elektrischen Ausgangs der Aufnahmemittel als ein Maß für den Temperaturanstieg über der Pumpe (10), dadurch gekennzeichnet, daß die Wärmeisolierung über jedem Aufnahmemittel (13, 14) eine Membran (18) aufweist, welche eine Tasche mit stillstehender Luft (17) um die Aufnahmemittel (13, 14) herum einschließt.

2. Verfahren nach Anspruch 1, dadurch gekennzeichnet, daß die Membran (18) eine becherförmige Membran aus einem nachgiebigen Material ist.

3. Verfahren nach Anspruch 2, dadurch gekennzeichnet, daß das nachgiebige Material ein Silikongummi ist.

4. Verfahren nach einem der Ansprüche 1 bis 3, dadurch gekennzeichnet, daß der Umfang der Membran (18) an die jeweiligen Rohrleitungen (11, 12) mittels Klebemittel angefügt ist, so daß die Tasche (17) innerhalb der Membran (18) luftdicht ist.

5. Verfahren nach einem der vorhergehenden Ansprüche, dadurch gekennzeichnet, daß die Temperatur-Abtast-Mittel Thermoelementanschlüsse (13, 14) enthalten, und die miteinander korrespondierenden Drahtelemente der Thermoelemente aus derselben Legierungsgruppe sind.

6. Verfahren nach Anspruch 5, dadurch gekennzeichnet, daß ein Draht des Thermoelementes aus Kupfer besteht und für den Anschluß an ein Spannungsmeßgerät (16) genutzt wird.

7. Verfahren nach Anspruch 5 oder 6, dadurch gekennzeichnet, daß die Thermoelementanschlüsse (13, 14) auf den Rohrleitungen (11, 12) mittels eines Haftmittels sicher befestigt sind.

8. Verfahren nach Anspruch 7, dadurch gekennzeichnet, daß das Haftmittel vor dem Abbinden eine Flüssigkeit mit niedriger Viskosität ist, um eine optimale Dichtheit des thermalen Kontaktes zwischen Anschluß und Rohrleitungsoberfläche zu erzielen.

9. Verfahren nach Anspruch 8, dadurch gekennzeichnet, daß das Haftmittel ein Alcyl-Cyano-Acrylat ist.

**Revendications**

1. Procédé de surveillance du rendement d'une pompe de liquide (10), comprenant les étapes de fixation de moyens de détection de température (13,14) en contact thermique étroit avec des surfaces extérieures des conduits d'aspiration et de refoulement (11,12) de la pompe (10) respectivement, création d'une isolation thermique(17,18,19) sur chacun des moyens de détection, et utilisation d'une sortie électrique des moyens de détection comme mesure de l'élévation de température à travers la pompe (10) ; caractérisé en ce que l'isolation thermique sur chacun des moyens de détection (13,14) comprend une membrane (18) enfermant une poche d'air calme (17) autour des moyens de détection (13,14).

2. Procédé suivant la revendication 1, caractérisé en ce que la membrane (18) est une membrane en forme de coupole en une matière flexible.

3. Procédé suivant la revendication 2, caractérisé en ce que ladite matière flexible est un caoutchouc de silicone.

4. Procédé suivant l'une quelconque des rvendications 1 à 3, caractérisé en ce que la périphérie de la membrane (18) est fixée à son conduit (11,12) au moyen d'un adhésif de sorte que la poche (17) à l'intérieur de la membrane (18) est étanche à l'air.

5. Procédé suivant l'une quelconque des revendications précédentes, caractérisé en ce que les moyens de détection de température comprennent des jonctions de thermocouple (13,14) et les éléments de fil mutuellement correspondants du thermocouple proviennent des mêmes lots d'alliage.

6. Procédé suivant la revendication 5, caractérisé en ce qu' un fil du thermocouple est en cuivre et est utilisé pour la connexion à un instrument de mesure de tension (16).

7. Procédé suivant la revendication 5 ou 6, caractérisé en ce que les jonctions de thermocouple (13,14) sont fixées auxdits conduits (11,12) au moyen d'un agent adhésif.

8. Procédé suivant la revendication 7, caractérisé en ce que l'agent adhésif est un liquide de faible viscosité, avant sa prise, afin d'obtenir une intimité optimale de contact thermique entre la jonction et la surface du conduit.

9. Procédé suivant la revendication 8, caractérisé en ce que l 'agent adhésif est un alkyl cyanoacrylate.

FIG.1

FIG.2